# EUROPÄISCHE PATENTANMELDUNG

(11) **EP 0 727 313 A1**
(43) Veröffentlichungstag der Anmeldung: **21.08.1996**
(21) Anmeldenummer: 96102221.7
(22) Anmeldetag: 15.02.1996
(51) Int. Cl.: B41F 33/00, H04M 11/00, H04M 11/04

(54) **Druckmaschine**

(30) Priorität: 20.02.1995 DE 19505692
(71) Anmelder: MAN Roland Druckmaschinen AG, 63012 Offenbach (DE)
(72) Erfinder: Albus, Marc, D-86465 Heretsried (DE); Messthaler, Reinhard, D-82291 Mammendorf (DE)
(74) Vertreter: Schober, Stefan

(57) **Zusammenfassung**

Durch die Erfindung wird eine Druckmaschine (2, 2', 2'') mit mehreren Druckwerken (4) und einem Falzwerk (7) sowie einem Leitstand (8) mit einem Video- und Audiokommunikationssystem (9) ausgestattet, durch das jederzeit ein Datenaustausch zur Wartung, Diagnose und Reparatur der Druckmaschine zwischen einer Druckerei (1), in der die Druckmaschine (2) installiert ist, und einer Ferndiagnose- und Fernwartungsstation (17) geschaffen.

## Beschreibung

Die Erfindung bezieht sich auf eine Druckmaschine mit mehreren Baueinheiten, insbesondere einer Rollenrotationsdruckmaschine mit mindestens einem Druckwerk und einem Falzwerk, in Verbindung einer Ferndiagnose- und Fernwartungsstation, in der ein Monitor installiert ist, wobei die Druckmaschine über Datenverbindungen mit der Ferndiagnose- und Fernwartungsstation verbunden ist.

Aus der Zeitschrift "Wirtschafts Woche" Nr. 38 vom 17.09.1993, Seite 84 und 86, ist es bereits bekannt, zwischen einer Druckerei und einem Druckmaschinenhersteller einer Online-Wartung einer Druckmaschine durchzuführen. Der Druckmaschinenhersteller besitzt eine Ferndiagnose- und Fernwartungsstation, in der ein Monitor installiert ist. In der Druckerei werden von einer Fernsehkamera Bilder von einer Druckmaschine aufgenommen. Diese Bilder werden zu der Ferndiagnose- und Fernwartungsstation des Druckmaschinenherstellers übertragen. Dort werden die auf dem Monitor dargestellten Bilder aus der Druckmaschine von einem Fachmann ausgewertet. Dieser gibt über eine Telefonverbindung Ratschläge zur Reparatur der Druckmaschine in der Druckerei. Es ist sogar möglich, über eine Online-Verbindung in die Steuerung der Druckmaschine einzugreifen.

Aus der Veröffentlichung geht nicht hervor, mit welchen technischen Mitteln die Verbindung zwischen der Druckmaschine und der Ferndiagnose- und Fernwartungsstation geschaffen wird und mit welchen technischen Mitteln die Druckmaschine ausgerüstet ist, um eine derartige Datenverbindung herzustellen.

Diese Aufgabe wird, wie in Patentanspruch 1 angegeben, gelöst.

Vorteilhafte Weiterbildungen ergeben sich aus den Unteransprüchen.

Besondere Vorteile der Erfindung ergeben sich dadurch, daß die Druckmaschine mit den verschiedensten Mitteln zur Datenaufnahme ausgestattet wird. Beispielsweise lassen sich optische Aufnahmemittel wie Endoskope, Videokameras, CCD-Displays oder Videcons in der Druckmaschine installieren. Als akustische Aufnahmemittel lassen sich beispielsweise Mikrophone verwenden. Die aufgenommenen Daten werden entweder über fest installierte elektrische Leitungen oder über Lichtwellenleiter oder über bewegliche Leiter oder über Funkverbindungen von den Aufnahmemittel zu den Video- und/oder Audiokommunikationssystem übertragen. Dort werden sie in einem Rechner verarbeitet und für die Datenübertragung zu der Ferndiagnose- und Fernwartungsstelle aufbereitet.

Nachstehend wird die Erfindung in Ausführungsbeispielen anhand der Zeichnungen näher erläutert. Es zeigen:
- Fig. 1:: Eine Rollenrotationsdruckmaschine in einer Druckerei, verbunden mit einer Ferndiagnose- und Fernwartungsstation,
- Fig. 2:: ein Video- und Audiokommunisationssystem zum Anschluß an eine Druckmaschine und
- Fig. 3:: mehrere Rollenrotationsdruckmaschinen in einer Druckerei, verbunden mit einer Mehrzahl von Ferndiagnose- und Fernwartungsstationen.

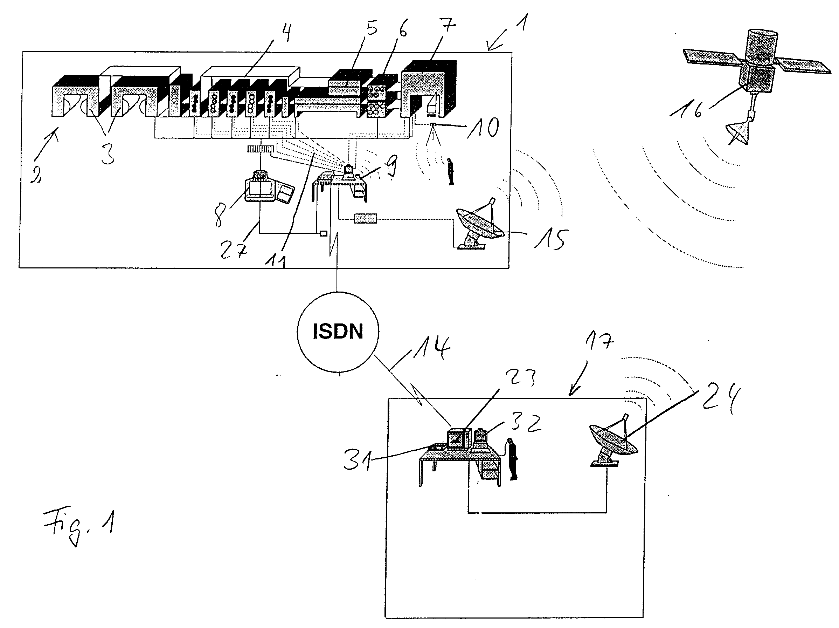

In einer Druckerei 1 (Fig. 1) ist eine Druckmaschine, beispielsweise eine Rollenrotationsdruckmaschine 2, aufgestellt. Die Rollenrotationsdruckmaschine 2 weist zwei Rollenwechsler 3, mehrere Druckwerke 4, einen Trockner 5, ein Kühlwerk 6 und ein Falzwerk 7 auf. Die Bestandteile 3 bis 7 der Rollenrotationsdruckmaschine 2 sind über elektrische Leitungen mit einem Leitstand 8 verbunden. Zusätzlich sind Leitungen für die elektrische oder optische Datenübertragung, d. h. Elektrokabel oder Lichtquellenleiter, in den Bestandteilen 3 bis 7 integriert. Die Leitungen sind beispielsweise in gesonderten Kabelschächten innerhalb der Seitenwände zusammen mit den übrigen Versorgungsleitungen der Rollenrotationsdruckmaschine 2 integriert. An den Außenseiten der Seitenwände sind Anschlußleisten vorhanden, an denen die Stecker von optischen, elektrischen oder akustischen Aufnahmemitteln eingesteckt werden können. Die Aufnahmemittel sind beispielsweise Videokameras, Videconc, CCD-Displays, Photozellen, optische Sensoren, akustische Sensoren, wie z. B. Mikrophone, oder elektrische Dedektoren, die innerhalb der Druckmaschine optische, akustische oder elektrische Signale aufnehmen und diese Signale über die Stecker und die Leitungen an ein in dem Steuerpult der Druckmaschine, der Teil des Leitstandes 8 ist, oder in der Nähe des Steuerpultes angeordnetes Video- und Audiokommunikationssystem 9 weitersenden. Die Aufnahmemittel sind entweder fest in der Rollenrotationsdruckmaschine 2 integriert, um an den "neuralgischen" Punkten sofort Messungen durchführen zu können, oder sie werden durch Bedienungspersonal jeweils einzeln aufgestellt, wie die in Fig. 1 auf einem Stativ dargestellte Videokamera 10 jeweils einzeln aufgestellt. Vorzugsweise werden nicht nur die Daten über einen Datenausgang über die in der Rollenrotationsdruckmaschine 2 integrierten Leitungen transportiert, auch die elektrische Versorgung der Aufnahmemittel kann über entsprechende Versorgungsleitungen, die in der Druckmaschine bereits vorhanden sind, sowie zugehörige Stecker an den Seitenwänden der Druckmaschine gewährleistet werden. Die von verschiedenen Aufnahmemitteln innerhalb der Rollenrotationsdruckmaschine 2 aufgenommenen Daten werden über verschiedene Datenleitungen 11 dem Video- und Audiokommunikationssystem zugeführt. Dieses weist entweder einen gesonderten Rechner auf, oder es nutzt den zu dem Leitstand 8 gehörigen Rechner.

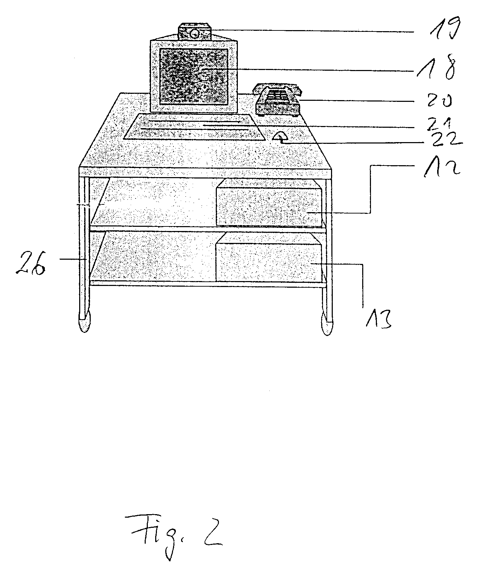

Das Video- und Audiokommunikationssystem 9 (Fig. 2) weist also beispielsweise einen bekannten Industrie-Personalcomputer (PC) auf. Dieser hat eine zentrale Steuereinheit (CPU-Karte (486/66)) und verschiedene Kommunikationsadapter zur Kommunikation mit der Rollenrotationsdruckmaschine 2. Hierzu gehört eine X.21-Karte. Ebenfalls sind Adapter für optische und akustische Signale (VGA-Adapter, Screenmachine (2-fach), Audioprozessor) und ein Adapter für Eingangs- und Ausgangsdaten (Multi I/O-Adapter) vorhanden. Darüber hinaus ist der PC 12 mit einem Videoswitch, einem Codierer/Decodierer sowie einer ISDN-Karte ausgestattet. Die von den Aufnahmemitteln in der Rollenrotationsdruckmaschine aufgenommenen Daten werden, sofern es sich um analoge Daten handelt, zunächst in einem A/D-Wandler digitalisiert und dann dem PC 12 zugeführt. Über die ISDN-Karte steht der PC 12 mit einer Multiplex-Demultiplexeinheit 13 in Verbindung. Von dort werden Daten aus dem PC 12 als digitale Signale im ISDN-Verfahren entweder über fest installierte optische oder elektrische Leitungen 14 oder von einer Bodensendestation 15 über einen Satelliten 16 zu einer Ferndiagnose- und Fernwartungsstation 17 transportiert.

Das Video- und Audiokommunikationssystem 9 weist darüberhinaus noch einen vorzugsweise farbigen Bildschirm 18, eine Personenkamera 19, ein Mobiltelefon 20 mit einem Headset sowie ein Keyboard 21 und eine Maus 22 auf. Über die Personenkamera 19 wird die Bedienungsperson aufgenommen, die Bildsignale der Personenkamera 19 werden vorzugsweise in einem Ausschnitt eines Bildschirms 23 in der Ferndiagnose- Fernwartungsstation 17 angezeigt. Diese ist, sofern die Daten über einen Satelliten 16 übertragen werden, mit einer Bodenempfangsstation 24 verbunden. Über die Leitungen 14 oder über den Satellit 16 lassen sich nun die aus den verschiedenen Bestandteilen 3 bis 7 der Rollenrotationsdruckmaschine 2 herkommenden Daten, nach Aufbereitung durch den PC 12 in der Druckerei 1 dem Bildschirm 23 darstellen und vom Wartungspersonal in der Ferndiagnose-Fernwartungsstation 17 auswerten. Für die Auswertung dient dort vorzugsweise ein PC 25. Dieser ist vorzugsweise mit denselben Bestandteilen wie der PC 12 ausgestattet. In der Ferndiagnose- Fernwartungsstation 17 sind Dateien mit Daten der Druckmaschine, insbondere graphische Ausschnittdarstellungen von Bestandteilen der Druckmaschine, Dateien mit Produktionsdaten der Druckmaschine und dgl. vorhanden, die ebenfalls mittels des PC 23 von dem Bedienungspersonal abgerufen werden können. Über Telefon vorzugsweise über Bildtelefon tauscht sich das Wartungs- und Bedienungspersonal in der Druckerei 1 mit dem Personal in der Ferndiagnose- und Fernwartungsstation 17 über Störungen und Fehler der Rollenrotationsdruckmaschine 2 aus. Ebenfalls über die Datenleitungen 14 oder über den Satelliten werden Daten zwischen der Rollenrotationsdruckmaschine 2 und der Ferndiagnose- und Fernwartungsstation 17 sowohl gesendet als auch empfangen.

Das Video- und Audiokommunikationssystem 9 ist vorzugsweise auf einer verfahrbaren Konsole 26 installiert. Dadurch kann das Bedienungspersonal das Video- und Audiokommunikationssystem 9 an verschiedene Stellen der Rollenrotationsdruckmaschine 2 heranfahren, um von dort aus mit der Ferndiagnose- und Fernwartungsstation 17 Verbindung aufzunehmen. Statt des in Fig. 2 dargestellten PC 12 kann das Video- und Audiokommunikationssystem 9 auch den in den Leitstand 8 bereits vorhandenen Rechner nutzen. Es ist mit dem Leitstand über eine Datenleitung 27 verbunden.

In einem weiteren Ausführungsbeispiel sind in zu Fig. 1 analoger Weise in einer Druckerei 1 zwei Rollenrotationsdruckmaschinen 2' und 2 vorhanden, die jeweils an ein Video- und Audiokommunikationssystem 9' und 9 '' angeschlossen sind. Diese sind über ein örtliches Datennetz (LAN) untereinander verbunden. Von einer einzigen Bodensendestation 15 oder über optische oder elektrische Leitungen 14 werden von dort die digitalisierte Daten in ISDN-Verfahren entweder zu einer einzigen Ferndiagnose- und Fernwartungsstation 17 mit mehreren Arbeitsplätzen 28 bis 30 für Wartungsingenieure gesendet, wobei letztere ebenfalls über ein lokales Datennetz (LAN) verbunden sind, oder zu mehreren (hier nicht dargestellt) Ferndiagnose- und Fernwartungsstationen.

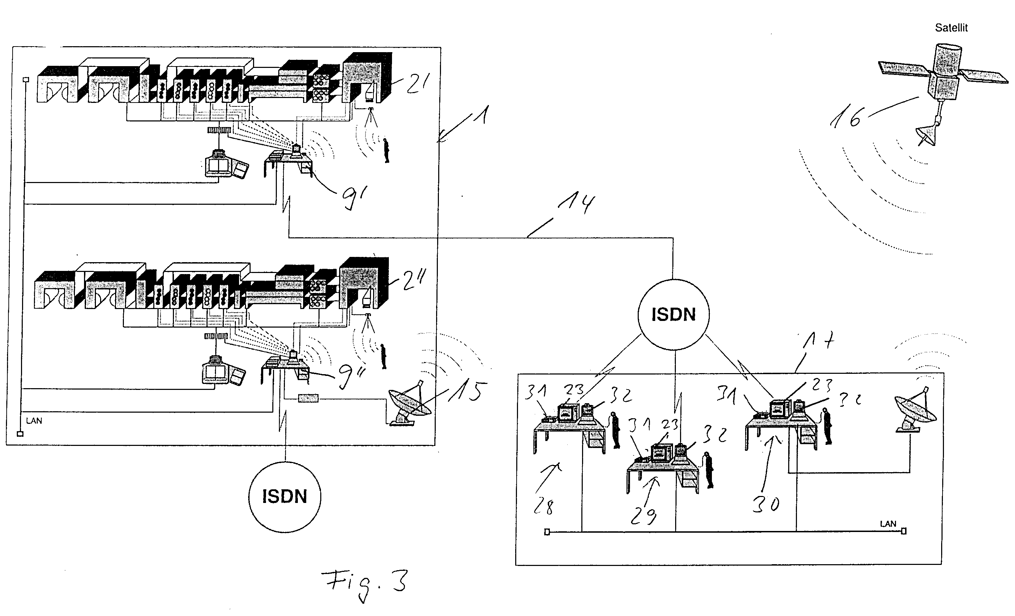

Durch den in Fig. 3 dargestellten Austausch zwischen der Druckerei 1 und der Ferndiagnose- und Fernwartungsstation 17 wird eine optimale Verbindung zur Wartung der dort installierten Rollenrotationsdruckmaschinen 2' und 2'' geschaffen, wobei Dateien übertragen werden können, terminel Emulationen und Videokonferenzen durchgeführt werden können. Auch zu Schulungszwecken lassen sich Bild und Ton übertragen. Die Rollenrotationsdruckmaschinen 2' und 2'' lassen sich mittels Daten-, Bild- und Tonübertragung widirektional von der Maschinenhalle der Druckerei 1 zu einem Servicetechniker oder mehreren Servicetechnikern die beispielsweise für verschiedene Teile der Rollenrotationsdruckmaschinen 2' und 2'' Fachleute sind übertragen. Die Servicetechniker in der Ferndiagnose- und Fernwartungsstation 17 können entweder über den Satelliten 16 oder über die Datenleitung 14 die Rollenrotationsdruckmaschinen 2' und 2'' fernsteuern, d. h. Software kontrollieren, Dateien kontrollieren, Software in der Druckerei 1 starten und benutzen, Fehler an den Rollenrotationsdruckmaschinen 2' und 2'' eingrenzen und beseitigen oder das Bedienungspersonal vor Ort veranlassen, selbst bestimmte Handgriffe an den Maschinen durchzuführen, wobei das Bedienungspersonal jeweils durch die Übertragung mittels der Personenkamera 19 beobachtet und angeleitet werden kann.

Besonders vorteilhaft ist es auch, wenn zur Aufnahme optischer Daten innerhalb der Rollenrotationsdruckmaschine 2, 2' oder 2'' Endoskope verwendet werden. Diese können auch an sonst für Bedienungspersonal unzugängliche Stellen gebracht werden, um dort Fehler aufzuspüren. Es ist beispielsweise auch möglich, die Schallwellen, beispielsweise den Körperschall, mit akustischen Empfängern aufzunehmen, diese als digitalisierte Daten an die Ferndiagnose- und Fernwartungsstation 17 zu übermitteln, damit dort das Service-Personal einen Vergleich mit in Dateien bereits abgelegten akustischen Daten, sog. Sonogrammen, durchführen kann, um daraus einen Fehler innerhalb der Druckmaschine, beispielsweise ein defektes Kugellager feststellen zu können.

In einem weiteren Ausführungsbeispiel ist es auch möglich, einen in der Druckerei 1 vorhandenen mit einem Sender und einem Empfänger ausgestattet ist und der mittels der Personenkmera 19 überwacht wird, von der Ferndiagnose- und Fernwartungsstation 17 fernzubedienen. Der Sender und der Empfänger des Roboters tauschen in jedem Fall ihre Daten entweder über das Video- und Audiokommunikationssystem 9, 9' oder 9'' mit der Ferndiagnose- und Fernwartungsstation 17 aus oder direkt mit dieser.

Das Video- und Audiokommunikationssystem 9, 9' oder 9'' läßt sich insbesondere auch nutzen, um eine Fehlerdiagnose einer Falzeinheit durchzuführen. Beispielsweise weist das Falzprodukt Ecken auf oder es ist schief gefalzt oder weist Punktureinstiche auf. Mittels Kamerabeobachtungen, beispielsweise mit der Videokamera oder mittels des Endoskops läßt sich die Bewegung der Schnittregistermarken oder der Schuppenabstand beobachten. Fehler können auch bei der Formatumstellung auftauchen. Daten vom Falzpaneel, beispielsweise Alarmmeldungen, lassen sich vom Falzwerksrechner und damit über den Leitstand 8 gleichzeitig mit von den Aufnahmemitteln gewonnenen Daten über die Leitung 11 dem Video- und Audiokommunikationssystem 9, 9' oder 9'' zuführen und in der Ferndiagnose- und Fernwartungsstation 17 auswerten. Auch statische Schadensbilder an Steuerkurven, Laufrollen, Schneidmesserbalken, Nutenbalken, Falzklappen, Bürsten für den ersten Querfalz der Bremsbürsten für den dritten Falz lassen sich filmen oder fotografieren und über das Video- und Audiokommunikationssystem 9, 9' oder 9'' der Ferndiagnose- und Fernwartungsstation 17 zuführen. Von dort lassen sich dann Daten über die optischen oder elektrischen Leitungen 14 oder über die Station 24, den Satelliten 16 und die Station 15 zu der Druckerei 1 senden. Auch Ersatzteile für die Rollenrotationsdruckmaschine 2, 2' oder 2'' können anhand von Bildern von dem Service-Personal in der Ferndiagnose- und Fernwartungsstation 17 identifiziert werden.

Die Bestandteile 4 bis 7 der Rollenrotationsdruckmaschine 2, 2' oder 2'' können auch mit einem Videorecorder gefilmt werden. In der Ferndiagnose- und Fernwartungsstation 17 ist vorzugsweise ein Videocassettenrecorder 31 vorhanden, in dem Videocassetten mit Informationen über die Rollenrotationsdruckmaschine 2, 2' oder 2'' abspielbar und über den PC 32 sowie die Leitungen 14 oder den Satellitten 16 an die Druckerei 1 übertragen.

## Patentansprüche

1. Druckmaschine mit mehreren Baueinheiten, insbesondere Rollenrotationsdruckmaschine (2, 2', 2'') mit mindestens einem Druckwerk (4) und einem Falzwerk (7) in Verbindung mit einer Ferndiagnose und Fernwartungsstation (17), in der ein Monitor (23) installiert ist, wobei die Druckmaschine (2, 2', 2'') über Datenverbindungen (14; 15, 16, 24) mit der Ferndiagnose- und Fernwartungsstation (17) verbunden ist, dadurch gekennzeichnet, daß ein in einem Steuerpult (8) der Druckmaschine (2, 2', 2'') inegriertes oder in der Nähe des Steuerpultes (8) angeordnetes, einen Rechner (12) umfassendes Video- und Audiokommunikationssystem (9, 9', 9'') vorgesehen ist, das über Video- und/oder Audiokanäle mit einzelnen Bauinheiten (3 bis 7) der Druckmaschine (2, 2', 2''), insbesondere den Druckwerken (4) oder dem Falzwerk (7) verbunden ist, daß der Rechner (12) die von der Druckmaschine (2, 2', 2'') empfangenen Video- und/oder Audiodaten für die Übertragung über die Datenverbindungen (14; 15, 16, 24) aufbereitet und daß die Video- und/oder Audiodaten an dem Monitor (23) der Ferndiagnose- und Fernwartungsstation (17) anzeigbar sind.

2. Druckmaschine (2, 2', 2'') nach Anspruch 1, dadurch gekennzeichnet, daß sie mit Aufnahmemitteln, insbesondere einer Videokamera, einem Endoskop, einem Videcon, Photodioden, akustischen Empfängern, insbesondere Mikrophonen, oder Aufnahmemitteln zum Empfang elektrischer Daten oder einem Videorecorder ausgestattet ist.

3. Druckmaschine (2, 2', 2'') nach Anspruch 2, dadurch gekennzeichnet, daß in ihr Datenleitungen, insbesondere elektrische Leitungen oder Lichtquellenleiter, zum Transport der von den Aufnahmemitteln aufgenommenen Daten zu den Video- und Audiokommunikationssystem (9, 9', 9'') vorgesehen sind.

4. Druckmaschine (2, 2', 2'') nach einem der Ansprüche 1 bis 3, dadurch gekennzeichnet, daß das Video- und Audiokommunikationssystem (9, 9', 9'') mit einem Industrie-Personalcomputer (12) in Verbindung mit einer Multiplex/Demultiplex Einheit (13) für widirektionale Datenübertragung zwischen der Druckerei (1) und der Ferndiagnose- Ferwartungsstation (17) ausgestattet ist.

5. Druckmaschine (2, 2', 2'') nach einem der Ansprüche 1 bis 4, dadurch gekennzeichnet, daß die Daten zwischen der Druckerei (1) und der Ferndiagnose- und Fernwartungsstation (17) über optische oder elektrische Leitungen (14) oder mittels Bodensende- und Empfangsstationen (15, 24) und einen Satelliten (16) übertragen werden.
